# EUROPÄISCHE PATENTSCHRIFT

(11) **EP 1 891 699 B1**
(45) Veröffentlichungstag und Bekanntmachung des Hinweises auf die Patenterteilung: **09.06.2010**
(21) Anmeldenummer: 04791141.7
(22) Anmeldetag: 04.10.2004
(51) Int. Cl.: H01Q 1/24, H01Q 1/08, B43K 29/08

(54) **Antenne für ein als Schreibgerät ausgebildetes mobiles Kommunikationsgerät**
Aerial for a mobile communication device integrated in a writing implement
Antenne pour dispositif de communication intégré dans un instrument d'écriture

(30) Priorität: 26.04.2004 DE 102004020272
(43) Veröffentlichungstag der Anmeldung: 27.02.2008
(73) Patentinhaber: Palm, Inc., Sunnyvale, CA 94085-2801 (US)
(72) Erfinder: MAMIER, Lothar, 81241 München (DE); SIGG, Jakob, 85635 Höhenkirchen (DE); ZIBERT, Klaus, 80335 München (DE)
(74) Vertreter: Samson & Partner
(86) Internationale Anmeldenummer: PCT/EP2004/052429
(87) Internationale Veröffentlichungsnummer: WO 2005/104297

(56) Entgegenhaltungen:
- EP-A- 0 307 667
- WO-A-96/32703
- DE-A1- 19 958 815
- GB-A- 743 948
- GB-A- 2 066 743
- US-A- 4 725 845

## Beschreibung

Die Erfindung betrifft ein mobiles Kommunikationsgerät zur drahtlosen Übertragung von Information.

Mobile Kommunikationsgeräte werden, um sie leichter mitführen zu können, im zunehmendem Maße miniaturisiert. Ein Problem der Miniaturisierung besteht darin, dass sämtliche erforderliche Komponenten immer kleiner gestaltet werden müssen. Dies stellt insbesondere bei einer Sende-/Empfangseinrichtung bzw. einer Antenne ein Problem dar, da die Breitbandigkeit und der Wirkungsgrad der Antenne von ihrem Volumen abhängt. Somit steht bei sehr kleinen Geräten, die vom Benutzer aufgrund ihrer Handlichkeit bevorzugt werden, nicht ausreichend Platz für die Antenne zur Verfügung.

Das Dokument GB 743 948 zeigt einen herkömmlichen Stift mit einer Feder zur Vorspannung der Mine aber ohne Kommunikationsgerät.

Die Offenlegungsschrift GB 2 066 743 zeigt ein in einem Stift integriertes Kommunikationsgerät gemäß dem Oberbegriff des Anspruchs 1.

Die Offenlegungsschrift EP 307 667 zeigt ein weiteres Beispiel eines Stiftes mit eingebautem Kommunikationsgerät.

Ausgehend von diesem Stand der Technik ist es Aufgabe der vorliegenden Erfindung, ein Kommunikationsgerät zu schaffen, dass einfach mitgeführt werden kann und gleichzeitig zufriedenstellende Sende- und Empfangseigenschaften aufweist.

Diese Aufgabe wird durch ein mobiles Kommunikationsgerät gemäß Anspruch 1 gelöst. Vorteilhafte Weiterbildungen sind Gegenstand der Unteransprüche.

Es ist Kern der Erfindung, dass das mobile Kommunikationsgerät als Kugelschreiber bzw. Stift mit einer Federeinheit zum Vorspannen einer Mine in einem Gehäuse des Kommunikatsiongeräts ausgebildet ist, wobei dies Federeinheit zugleich alls Antenne dient.

Durch die Mehrfachfunktionalität der Federeinheit kann die Größe des gesamten mobilen Kommunikationsgeräts beibehalten werden.

Weiterhin ist keine zusätzlicher konstruktionstechnischer Aufwand für die Antenne erforderlich. Dies verbilligt die Herstellung eines derartigen Kommunikationsgeräts.

Weitere Vorteile der Erfindung werden anhand von Ausführungsbeispielen mittels der Figur beschrieben. Es zeigt:

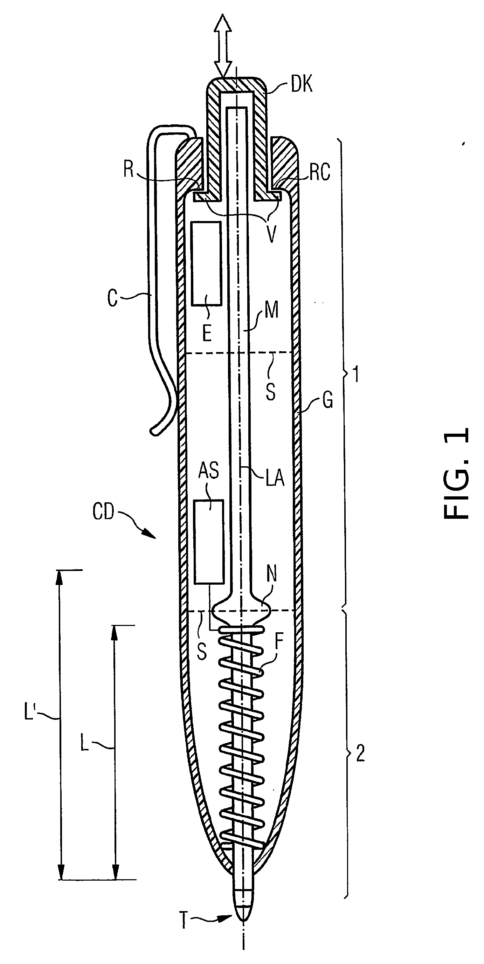

- Figur 1:: den schematischen Aufbau des Kommunikationsge- räts.

In Figur 1 ist schematisch der Aufbau eines Kommunikationsgeräts CD zu sehen, welches gleichzeitig als Schreibgerät verwendet werden kann. Bei dem mobilen Kommunikationsgerät handelt es sich beispielsweise um einen PDA, ein Mobilfunkendgerät, ein Walky-Talky oder dergleichen.

Das Kommunikationsgerät CD in Form eines Kugelschreibers weist ein Gehäuse G auf, in dem sich eine Mine M befindet. Die Mine M kann durch einen Federmechanismus aus dem Gehäuse G herausgefahren, bzw. in das Gehäuse G hineingefahren werden. Dieser wird durch einen Druckknopf DK, Nasen N an der Mine M sowie eine Feder bzw. Federeinheit F, welche zwischen dem Gehäuse G und einer Nase N eingespannt ist, gebildet. Durch Betätigen des Druckknopfes DK in Richtung des entgegengesetzten Endes des Kommunikationsgeräts CD wird dieser nach unten verschoben, wobei Vorsprünge V an Rastmitteln R einrasten und somit die Mine M in einer Position fixieren, in der die Spitze T der Mine M aus dem Gehäuse G des Kommunikationsgerätes CD herausragt.

Es befinden sich also Rastmittel R am Gehäuse und komplementäre Rastmittel RC am Druckknopf DK des Kommunikationsgerätes CD. In dieser Stellung ist die Feder F, deren Ausdehnung durch die Nasen N an der Mine M und das Gehäuse G begrenzt ist komprimiert, so dass durch erneutes Betätigen des Druckknopfes DK dieser wieder entrastet wird und sich somit nach oben bewegen kann. Durch die Vorspannung mittels der Feder F bewegt sich die Mine ins Gehäuse G zurück.
Derartige Mechanismen sind dem Fachmann von Kugelschreibern oder anderen Minenschreibern her bekannt, weshalb hier nicht näher darauf eingegangen wird.

Die Feder F ist mit einer Antennenschaltung AS verbunden, so dass sie gleichzeitig als Antenne fungieren kann. Die Antennenschaltung dient der Einspeisung des Sendesignals in die Antenne sowie der Abnahme des Empfangssignals von der Antenne. Dabei können Sende- und Empfangssignal im Zeitbereich und/oder im Frequenzbereich getrennt sein.

Das mobile Kommunikationsgerät CD weist also eine Mehrfachfunktionalität auf, nämlich einerseits als Schreibgerät, und andererseits eben als Kommunikationsgerät. Dadurch wird sein Mitführen vom Benutzer als weniger aufwendig empfunden, insbesondere da ja ein Schreibgerät zumeist ohnehin mitgeführt wird.

Elektronische Schaltungen E sind zum Betreiben des Kommunikationsgerätes CD im Gehäuse G untergebracht. Die elektronischen Schaltungen E und die Antennenschaltung AS sind durch Schirmungen S gegenüber der als Antenne verwendeten Feder F abgeschirmt.

In der in Figur 1 gezeigten Realisierung befinden sich die elektronischen Schaltungen E und die als Antenne verwendete Federeinheit F maximal voneinander entfernt, um sich nicht gegenseitig zu beeinflussen.

In einer anderen Ausführungsform ist die Anordnung der elektronischen Komponenten und der Antenne entlang der Längsrichtung gerade vertauscht d.h. die Feder sitzt oben direkt unterhalb des Druckknopfes und die elektronischen Komponenten im unteren Bereich. Diese Anordnung hat den Vorteil, dass der elektrische Kontakt an die Antenne an dem feststehenden Ende der Feder erfolgen kann.

Es sind also zwei Ausführungsformen möglich: (a) elektronische Komponenten (E) oben und Antenne (F) unten oder (b) Antenne (F) oben (unterhalb des Druckknopfes) und elektronische Komponenten (E) im unteren Teil des Stifts.

Alternativ oder zusätzlich zu der üblichen Schirmung der empfindlichen elektronischen Komponenten E mittels Schirmdeckel werden diese durch die Schirmungen S von der Antenne elektromagnetisch isoliert. Dadurch werden trotz eines geringen räumlichen Abstands zwischen Antenne und anderen elektronischen Komponenten, wie er allein schon aufgrund der Miniaturisierung bedingt wird, bei letzteren Störungen, insbesondere im Sendebetrieb, in dem RF-Leistung über die Antenne abgestrahlt wird, vermieden.

Eine Schirmung S ist beispielsweise als Scheibe ausgebildet, diese ist mit dem Gehäuse G so verbunden, dass an diesem Übergang keine HF-Strahlung eindringen kann und weist in der Mitte eine Aussparung für die Mine M auf.

Das Gehäuse besteht vorzugsweise über die Länge des Kommunikationsgeräts CD aus verschiedenen Materialien, um einerseits die elektronischen Schaltungen E möglichst gut gegen elektromagnetische Störungen aus der Umgebung abzuschirmen und andererseits eine gute Abstrahlung der als Antenne verwendeten Feder F zu ermöglichen.

Dazu besteht das Gehäuse im Bereich 1 aus einem Metall, wozu sich beispielsweise Aluminium aufgrund seines geringen Gewichts gut eignet, und im Bereich 2 aus einem für elektromagnetische Strahlung im verwendeten Wellenlängenbereich für Senden und Empfangen möglichst durchlässigen Material, wie beispielsweise Kunststoff. Alternativ kann im Bereich 1 Kunstoff mit leitendenen eingegossenen Elementen, wie er beispielsweise durch Spritzgiessen hergestellt werden kann, verwendet werden, der ebenfalls ein sehr geringes Gewicht aufweist und preisgünstig hergestellt werden kann.

Eine Lackierung, insbesondere mit einem Metalliclack, der im Bereich 1 z.B. als Designelement aufgetragen wird, kann ebenfalls die Funktion der elektromagnetischen Abschirmung erbringen, sofern im Lack Metallpartikel enthalten sind, die die elektromagnetischen Wellen in dem gewünschten Frequenzbereich kurzschließen (z.B. Autolacke).

Für eine geeignete Modellierung der Abstrahlcharakteristik der als Antenne verwendeten Feder F können auch die Nasen N sowie die Mine M selber in eine Antenneneinheit mit einbezogen werden.

In einer Ausgestaltung wird die unterschiedliche Kompression der Feder F, je nachdem ob die Mine sich im Gehäuse G befindet oder aus dem Gehäuse G herausragt, genutzt, um die Abstrahlung auf unterschiedliche Wellenlängenbereiche einzustellen. Dazu wird die Länge L der Feder F in komprimiertem Zustand und L' in nicht komprimiertem Zustand geeignet gewählt. Zusätzlich werden Deformationen der Feder F zum Modellieren der geeigneten Abstrahlcharakteristik der Antenne bzw. Feder F herangezogen.

Alternativ oder zusätzlich wird die Kompression nur bei einem Teil der Feder F herbeigeführt, indem z.B. die Länge des anderen Teils fixiert wird. Alternativ werden Teilbereiche bzw. Untereinheiten der Feder F mit unterschiedlichen Federkonstanten realisiert. Somit kann bei dem nicht oder nur gering komprimierten Teil eine konstante Abstrahlcharakteristik beibehalten werden.

Eine derartige Realisierung, bei der eine Feder F des Druckmechanismus zum Hereinfahren bzw. Herausfahren der Mine M aus dem Gehäuse so ausgelegt ist, dass sie neben der ursprünglichen Funktion gleichzeitig als Antenne eingesetzt werden kann, ermöglicht den Bau von sehr kompakten Kommunikationsgeräten in Stiftform, da zwei Funktionen, nämlich Antenne sowie ein Teil des Druckmechanismus nur einmal Platz benötigen.

Weiterhin kann somit eine Kostenoptimierung erreicht werden, da die Antenne nicht separat gefertigt werden muss.

Ein weiterer Vorteil besteht darin, dass insgesamt Kommunikationsgeräte mit geringerem Gewicht gestaltet werden können.

### Bezugszeichenliste

- DK: Druckknopf
- R: Rastmittel
- V: Vorsprung
- RC: Komplementäres Rastmittel
- M: Mine
- E: Elektronische Schaltung
- C: Clip
- S: Schirmung
- G: Gehäuse
- AS: Antennenschaltung
- CD: Kommunikationsgerät
- N: Nase
- F: Feder
- T: Spitze der Mine
- L: Länge der Feder F in komprimiertem Zustand
- L': Länge der Feder F in nicht komprimiertem Zustand

- 1: Bereich des Kommunikationsgeräts, wo sich keine Antenne befindet
- 2: Bereich des Kommunikationsgeräts, wo sich die Feder F als Antenne befindet

## Patentansprüche

1. Als Stift ausgebildetes mobiles Kommunikationsgerät (CD) mit
- einem Gehäuse (G) mit einer Längsachse (LA);
- einer im Gehäuse (G) befindlichen Mine (M), welche entlang der Längsachse ausgerichtet ist;
- einer Antenne zur drahtlosen Übertragung von Information, welche durch eine Federeinheit (F) gebildet wird;
**dadurch gekennzeichnet,**
- **dass** die Mine (M) in dem Gehäuse (G) durch die Federeinheit (F) vorgespannt wird.

2. Kommunikationsgerät (CD) nach Anspruch 1, bei dem die Federeinheit (F) zumindest zwei Untereinheiten aufweist, welche bei Kompression unterschiedlich stark deformierbar sind, wobei eine die elektromagnetische Ausstrahlung beschreibende Antennencharakteristik durch die geringer deformierbare Untereinheit oder Untereinheiten beschrieben wird.

3. Kommunikationsgerät (CD) nach Anspruch 1 oder 2, bei dem die Federeinheit (F) in einem nicht-komprimierten Zustand als Antenne in einem ersten Wellenlängenbereich und in komprimierten Zustand als Antenne in einem zweiten Wellenlängenbereich betrieben wird.

4. Kommunikationsgerät (CD) nach einem der vorhergehenden Ansprüche, das eine Antennenschaltung (AS) zum Betreiben der Antenne aufweist, welche mit der Federeinheit (F) verbunden ist.

5. Kommunikationsgerät (CD) nach einem der vorhergehenden Ansprüchen, bei dem die Federeinheit (F) einerseits und zumindest ein elektronisches Bauelement (E) andererseits an entgegengesetzten Endbereichen des Stiftes angeordnet sind.

6. Kommunikationsgerät (CD) nach einem der vorhergehenden Ansprüchen, bei dem zwischen Federeinheit (F) und Antennenschaltung (AS) einerseits und zumindest einem elektronischen Bauelement (E) andererseits eine Schirmung (S) vorgesehen ist.

7. Kommunikationsgerät (CD) nach einem der vorhergehenden Ansprüche, bei dem das Gehäuse (G) des Kommunikationsgeräts zumindest im Bereich der Feder (F) aus für elektromagnetische Strahlung durchlässigem Material gefertigt ist und zumindest im Bereich des zumindest einen elektrischen Bauelements (E) aus für elektromagnetische Strahlung undurchlässigem Material gefertigt ist.

8. Kommunikationsgerät (CD) nach einem der vorhergehenden Ansprüche, bei dem das Gehäuse (G) zumindest teilweise mit einem für elektromagnetische Strahlung undurchlässigen Lack lackiert ist.

## Claims

1. A mobile communication device (CD) formed as a pen, the mobile communication device comprising:
- a housing (G) having a longitudinal axis (LA);
- a cartridge (M) disposed in the housing (G), the cartridge (M) being aligned along the longitudinal axis (LA);
- an antenna for wireless transmission of information, the antenna being formed by a spring unit (F);
**characterized in that**
- the cartridge (M) is biased/pre-stressed in the housing (G) by means of the spring unit (F).

2. The communication device (CD) according to claim 1, wherein the spring unit (F) has at least two subunits, that are differently deformable in case of a compression, wherein an antenna characteristic describing the electromagnetic radiation is described by the less deformable subunit or subunits.

3. The communication device (CD) according to claim 1 or 2, wherein the spring unit (F) is operated in a non-compressed state as antenna in a first wavelength range and in a compressed state as antenna in a second wavelength range.

4. The communication device (CD) according to one the preceding claims, which has an antenna circuit (AS) for operating the antenna, which is connected to the spring unit (F).

5. The communication device (CD) according to one of the preceding claims, wherein the spring unit (F) on the one hand and at least one electronic component (E) on the other hand are disposed at opposite end regions of the pen.

6. The communication device (CD) according to one of the preceding claims, wherein a shielding (S) is provided on the one hand between spring unit (F) and antenna circuit (AS) and at least an electronic component (E) on the other hand.

7. The communication device (CD) according to one of the preceding claims, wherein the housing (G) of the communication device is fabricated at least in the region of the spring (F) from a material transparent for electromagnetic radiation and at least in the region of the at least one electric component (E) from a material non-transparent for electromagnetic radiation.

8. The communication device (CD) according to one of the preceding claims, wherein the housing (G) is at least partially varnished with a varnish non-transparent for electromagnetic radiation.

## Revendications

1. Dispositif de communication (CD) mobile configuré en tant que crayon, le dispositif de communication comprenant:
- une boîte (G) ayant un axe longitudinal (LA);
- une mine (M) se trouvant dans la boîte (G), la mine (M) étant alignée le long de l'axe longitudinal (LA);
- une antenne pour la transmission sans fil de l'information qui est formée par une unité de ressort (F);
**caractérisé en ce que**
- la mine (M) est précontrainte dans la boîte (G) par l'unité de ressort (F).

2. Dispositif de communication (CD) selon la revendication 1, l'unité de ressort (F) comportant au moins deux sous-unités qui sont différemment déformables lors d'une compression, une caractéristique d'antenne décrivant la radiation électromagnétique étant décrite par la sous-unité moins déformable ou des sous-unités moins déformables.

3. Dispositif de communication (CD) selon la revendication 1 ou 2, l'unité de ressort (F) étant opérée dans un état non-comprimé en tant qu'antenne dans une première zone de longueur d'onde et dans un état comprimé en tant qu'antenne dans une deuxième zone de longueur d'onde.

4. Dispositif de communication (CD) selon l'une des revendications précédentes comportant un circuit d'antenne (AS) pour l'opération de l'antenne qui est connectée à l'unité de ressort (F).

5. Dispositif de communication (CD) selon l'une des revendications précédentes, l'unité de ressort (F) d'une part et au moins un composant électronique (E) d'autre part sont agencés à des extremités opposées du crayon.

6. Dispositif de communication (CD) selon l'une des revendications précédentes, un blindage (S) étant prévu d'une part entre l'unité de ressort (F) et le circuit d'antenne (AS) et au moins un composant électronique (E) d'autre part.

7. Dispositif de communication (CD) selon l'une des revendications précédentes, la boîte (G) du dispositif de communication étant fabriquée au moins dans la zone du ressort (F) par un matériau perméable à la radiation électromagnétique et étant fabriquée au moins dans la zone de l'au moins un composant électrique (E) d'un matériau imperméable à la radiation électromagnétique.

8. Dispositif de communication (CD) selon l'une des revendications précédentes, la boîte (G) étant vernie au moins partiellement avec un verni imperméable à la radiation électromagnétique.
